# EUROPEAN PATENT SPECIFICATION

(11) **EP 3 370 500 B1**
(45) Date of publication and mention of the grant of the patent: **14.09.2022**
(21) Application number: 16861139.0
(22) Date of filing: 29.09.2016
(51) Int. Cl.: A01D 34/66, A01D 43/00

(54) **THREE HEADED CUTTING APPARATUS FOR ATTACHMENT TO A LAWNMOWER TRACTOR**
DREIKÖPFIGE SCHNEIDEVORRICHTUNG ZUM ANBAU AN EINEN RASENMÄHERTRAKTOR
APPAREIL DE COUPE À TROIS TÊTES POUR UNE FIXATION À UN TRACTEUR DE TONDEUSE À GAZON

(30) Priority: 02.11.2015 CA 2910723
(43) Date of publication of application: 12.09.2018
(73) Proprietor: Coutu, Christian, Montreal, Quebec H1H 0A1 (CA)
(72) Inventor: Coutu, Christian, Montreal, Quebec H1H 0A1 (CA)
(74) Representative: Hege, Frédéric
(86) International application number: PCT/CA2016/000245
(87) International publication number: WO 2017/075691

(56) References cited:
- WO-A1-2010/140929
- CA-A1- 2 518 114
- CA-A1- 2 933 386
- CA-C- 2 188 617
- DE-U1- 20 320 492
- FR-A1- 2 793 991
- US-A- 3 720 294
- US-A- 4 104 851
- US-B1- 8 316 627
- US-B2- 7 175 380

## Description

### FIELD OF THE INVENTION

The present invention relates generally to mowing equipment but more particularly to a three headed cutter apparatus for attachment to a lawnmower tractor.

### BACKGROUND OF THE INVENTION

Cutting grass around impediments such as trees or posts can slow down the mowing process. More often than not, a lawnmower or, even more so, a lawn mowing tractor has to go around the impediment and miss patches of grass. This has to be cut later using a weed wacker. There are some tractors that can pivot on a set of bi-directionally rotating wheels so that they can pivot on themselves and provide better cutting but they do require great skill from the operator. There are also attachments tagged onto lawn mowing tractors but they prove cumbersome more than useful. There has to be a better way to get around those impediments.

Document FR2793991 describes a mower with variable cutting width. It comprises three rotary cutting heads, which are integral with a support plate, the latter comprising means making it possible to ensure its fixing on a support/engine machine, as well as its rotation about an axis which is substantially perpendicular to it, so as to vary the angular arrangement of the cutting heads with respect to the direction of movement of the machine. This solution is not satisfactory, the handling of this mower being uneasy.

### SUMMARY OF THE INVENTION

In view of the foregoing disadvantages inherent in the known devices now present in the prior art, the present invention, which will be described subsequently in greater detail, is to provide objects and advantages which are:

To provide for an edge trimmer that can be adapted to a lawn mowing tractor to speed up the trimming process.

In order to do so, the invention comprises an accessory that is attached to the side of a lawn mowing tractor and has three cutting head assemblies positioned in a triangular fashion and which pivot around a central axis so that when a head hits an impediment, it rotates all three heads around the central axis so that the next head can continue trimming around the impediment. All three heads are located to the side of the tractor so that their trimming ends where the main bade of the lawnmower tractor begins.

The three headed cutter is comprised of a cover assembly under which are located the three cutting head assemblies. The cover assembly, along with the cutting head assemblies, are designed so as to rotate around impediments. The cover assembly pivots around a central axis.

A ratcheting means consisting of a pawl and toothed gear allows the cover assembly to pivot in only one direction. The three headed cutter has a connecting member which connects it to the tractor by way of an articulated boom arm. The boom arm connects with the connecting member at a pivot point, from which a biasing means is also connected. The biasing means and pivot point allow for the cover assembly to take in the shock of hitting an impediment by having the boom arm move at its pivot point so as to move the cover without damage just before the start of its rotation around the impediment. Each of the three cutting head assemblies consists of a twin blade member and a caster. The caster rotates with the cutting head assemblies. The cover assembly is further supported by a support wheel which takes on the load from the connecting member and the articulated boom arm. The central axis has a motor from which extends downwardly a shaft member, which itself connects to a multiple track pulley which has three belts, one for each cutting head pulley, which themselves connect directly to the cutting head by way of a short shaft member. Tension pulley assemblies, which consist in a pulley and biasing means assembly, keep tension on the belts.

The cover assembly has rounded edges which define three sections, which are equidistant from each other.

The cover assembly is further comprised of lid members, one for each section, to give access to the cutting head assemblies.

The connecting member is hingedly attached to the tractor.

The motor can be electric or hydraulic, or driven by a flexible shaft connecting to a compatible output on the tractor.

The ratcheting means has a three toothed gear.

The three headed cutter is used in combination with a lawnmower tractor.

There has thus been outlined, rather broadly, the more important features of the invention in order that the detailed description thereof that follows may be better understood, and in order that the present contribution to the art may be better appreciated. There are additional features of the invention that will be described hereinafter and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the scope of the claims.

These together with other objects of the invention, along with the various features of novelty which characterize the invention, are pointed out with particularity in the claims annexed to and forming a part of this disclosure. For a better understanding of the invention, its operating advantages and the specific objects attained by its uses, reference should be made to the accompanying drawings and descriptive matter which contains illustrated preferred embodiment of the invention.

### BRIEF DESCRIPTION OF THE DRAWINGS

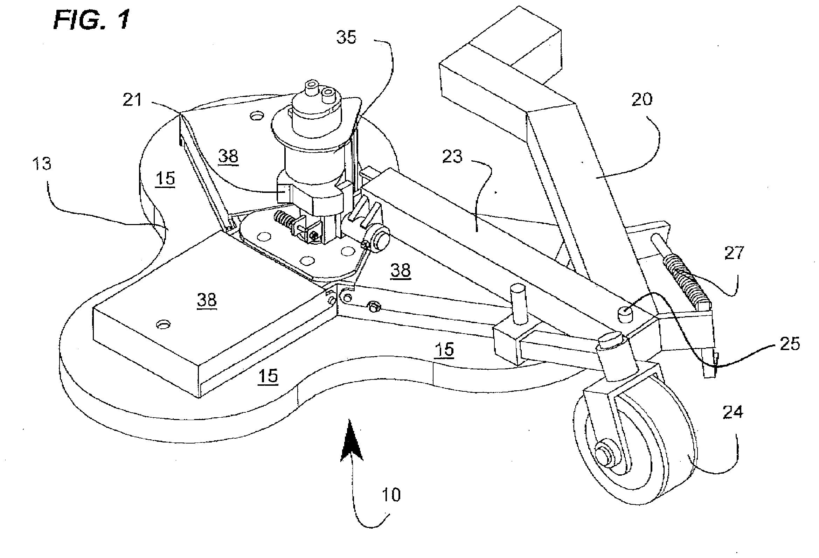

Fig. 1 Isometric view of the invention.

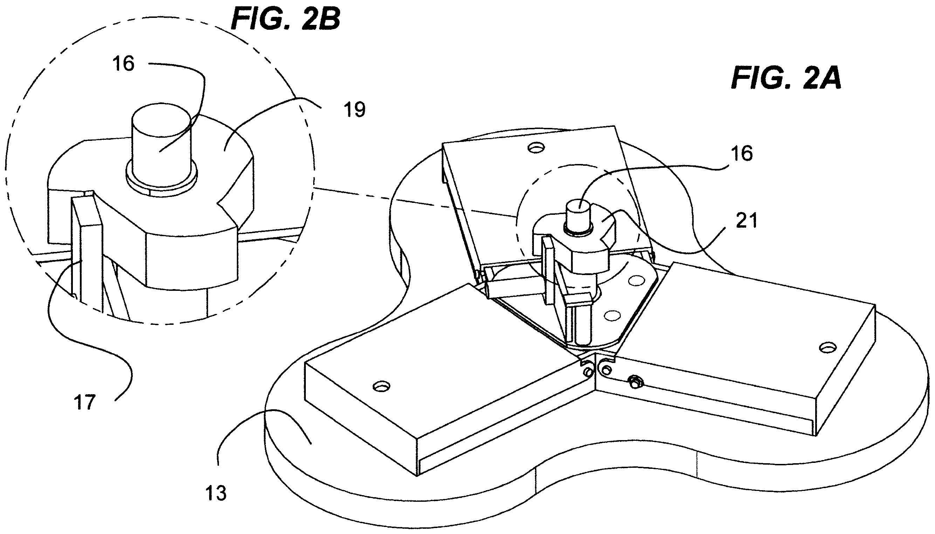

Figs. 2a-b Isometric view of the cover and detail of ratchet assembly.

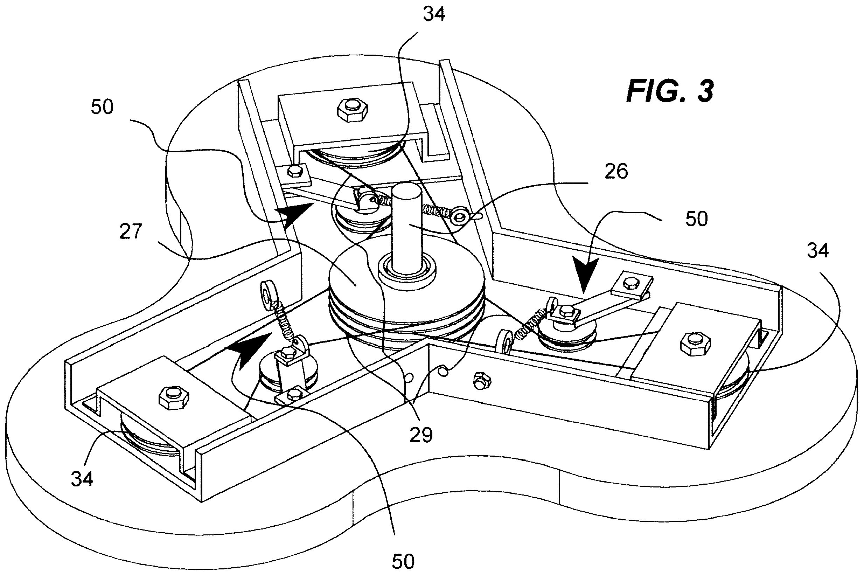

Fig. 3 Isometric view of the cover with lids removed.

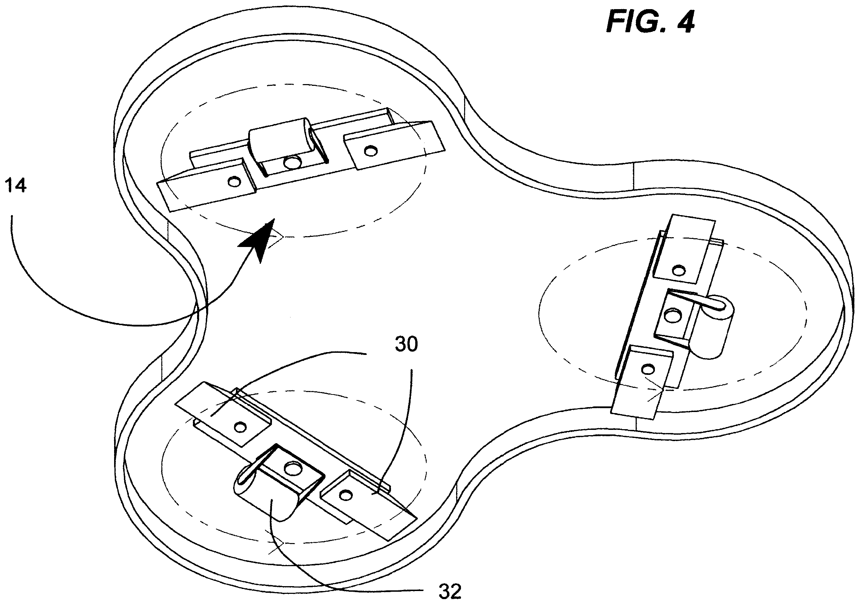

Fig. 4 Isometric view of the underside of the cover.

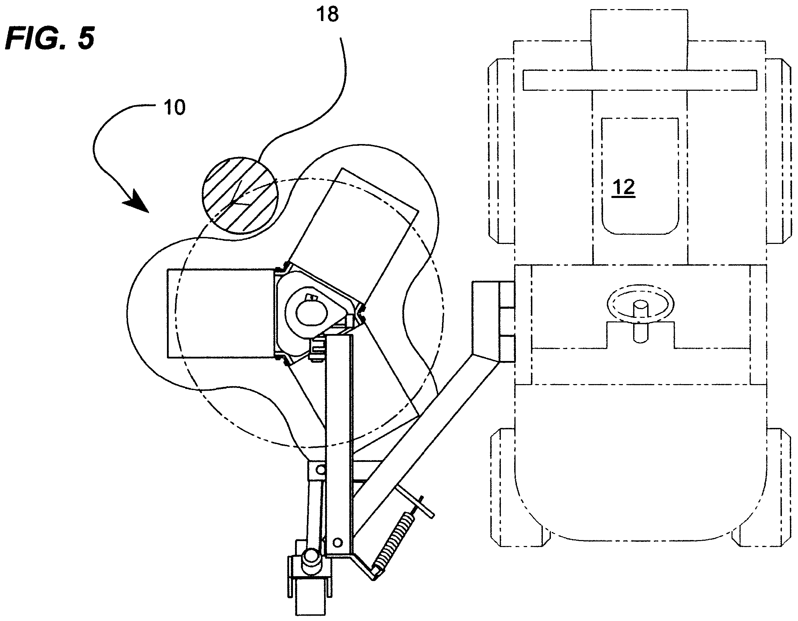

Fig. 5 Top view of the tractor and the invention.

### DETAILED DESCRIPTION

A three headed cutter apparatus (10) is attached to a lawn mower tractor (12). It is comprised of a cover assembly (13) under which are located three cutting head assemblies (14) positioned in a triangular fashion. The cover assembly (13) along with the cutting head assemblies (14) are designed so as to rotate around impediments (18) as it pivots around a central axis (16). With the three cutting head assemblies (14) configuration, there is always another cutting head assembly (14) to take over to continue trimming around the impediment (18). All three cutting head assemblies (14) are located to the side of the tractor (12) so that their trimming ends where the main bade (not shown) of the lawnmower tractor (12) begins. A ratcheting means (21) consisting of a pawl (17) and three toothed gear (19) allows the cover assembly (13) to pivot in only one direction.

The three headed cutter assembly (10) has a connecting member (20) which connects it to the tractor (12) by way of an articulated boom arm (23). The boom arm (23) connects with the connecting member (20) at a pivot point (25), from which a biasing means (27) is also connected. The biasing means (27) and pivot point (25) allow for the cover assembly (13) to take in the shock by having the boom arm (23) move at its pivot point (25) so as to move the cover assembly (13) without damage just before the start of its rotation around the impediment (18).

Each of the three cutting head assemblies (14) consist of a twin blade member (30) and a caster (32). The casters (32) rotate with the cutting head assemblies (14) and as such they point in all directions at once while not pointing in any direction. What that means is that they can roll at all time in the direction of the tractor and keep the cutting head assemblies (14) and the cover assembly (13) at a proper height relative to the ground surface. The cover assembly (13) is further supported by a support wheel (24) which takes on the load from the connecting member (20) and the articulated boom arm (23).

In the middle of the cover assembly (13) is the central axis (16) which has a motor (35) from which extends downwardly a shaft member (26), which itself connects to a multiple track pulley (27) which has three belts (29), one for each cutting head pulley (34), which themselves connect directly to the cutting head assemblies (14) by way of a short shaft member (36). Tension pulley assemblies (50), which consist in a pulley and biasing means assembly, keep tension on the belts (29).

The motor (35) can be electric or hydraulic, or driven by a flexible shaft connecting to a compatible output on the tractor (12).

The cover assembly (13) has rounded edges which define three sections (15), which are equidistant from each other. For example, the casters (32) in each of the three sections could each represent a point in an equilateral triangle. The generally curvy shape helps with the rotation of the cover assembly (13) when it impacts an impediment.

The cover assembly (13) is further made out of lid members (38), one for each section (15) to facilitate access as well as replacement of the parts located within the sections (15).

The connecting member (20) is hingedly attached to the tractor (12) so that it, as well as the cover assembly (13). can be lifted for general maintenance and repairs.

With respect to the above description then, it is to be realized that the optimum dimensional relationships for the parts of the invention, to include variations in size, materials, shape, form, function and manner of operation, assembly and use, are deemed readily apparent and obvious to one skilled in the art.

Therefore, the foregoing is considered as illustrative only of the principles of the invention.

## Claims

1. A cutter (10) having three cutting heads (14) for use as attachment to a lawnmower tractor (12) is comprised of a cover assembly (13) under which are located said three cutting head assemblies (14) positioned in a triangular fashion; said cover assembly (13) pivots around a central axis (16) ; said three headed cutter (10) has a connecting member (20) for connecting it to said tractor (12) by way of an articulated boom arm (23) ; said boom arm connects with said connecting member (20) at a pivot point (25), from which a biasing means (27) is also connected; each of said three cutting head assemblies (14) consists of a twin blade member (30) and a caster (32) ; said caster (32) rotates with said cutting head assemblies (14) ; said cover assembly (13) is further supported by a support wheel (24) which takes on the load from said connecting member (20) and said articulated boom arm(23) ; said central axis (16) has a motor (35) from which extends downwardly a shaft member (26), which itself connects to a multiple track pulley (27) which has three belts (29), one for each cutting head pulley (34), which themselves connect directly to said cutting head (14) by way of a short shaft member (36) ; tension pulley assemblies (50), which consist in a pulley and biasing means assembly, keep tension on said belts (29), **characterized in that** it further comprises a ratcheting means consisting of a pawl (17) and toothed gear (19) allowing said cover assembly (13) to pivot in only one direction.

2. The cutter (10) of claim 1 wherein said cover assembly (13) has rounded edges which define three sections (15), which are equidistant from each other.

3. The cutter (10) of claim 1 wherein said cover assembly (13) is further comprised of lid members (38), one for each section (15), to give access to said cutting head assemblies (14).

4. The cutter (10) of claim 1 wherein said connecting member (20) is hingedly attached to said tractor (12).

5. The cutter (10) of claim 1 wherein said ratcheting means (21) has a three toothed gear (19).

6. The cutter (10) of claim 1 wherein said motor (35) can be electric or hydraulic, or driven by a flexible shaft connecting to a compatible output on the tractor (12).

7. A combination of a cutter (10) according to one of the previous claims and a lawnmower tractor (12).

8. The combination of claim 7 wherein said cover assembly (13) has rounded edges which define three sections (15), which are equidistant from each other.

9. The combination of claim 7 wherein said cover assembly (13) is further comprised of lid members (38), one for each section (15), to give access to said cutting head assemblies (14).

10. The combination of claim 7 wherein said connecting member (20) is hingedly attached to said tractor (12).

11. The combination of claim 7 wherein said motor (35) can be electric or hydraulic, or driven by a flexible shaft connecting to a compatible output on said tractor (12).

## Patentansprüche

1. Dreiköpfiges (14) Schneidgerät (10) zur Verwendung als Anbaugerät an einem Rasenmähertraktor (12), bestehend aus einer Abdeckanordnung (13), unter der die drei Schneidkopfanordnung (14) dreieckig angeordnet sind; die Abdeckanordnung (13) ist um eine Mittelachse (16) schwenkbar; die dreiköpfige Schneidevorrichtung (10) hat ein Verbindungselement (20) zur Verbindung mit dem Traktor (12) über einen gelenkigen Auslegerarm (23); der Auslegerarm ist mit dem Verbindungselement (20) an einem Drehpunkt (25) verbunden, von dem aus auch ein Vorspannmittel (27) angeschlossen ist; jede der drei Schneidkopfanordnungen (14) besteht aus einem Zwillingsklingenelement (30) und einer Lenkrolle (32); die Lenkrolle (32) dreht sich mit der Schneidkopfanordnung (14); die Abdeckanordnung (13) wird außerdem von einem Stützrad (24) getragen, das die Last von dem Verbindungselement (20) und dem Gelenkarm (23) aufnimmt; die zentrale Achse (16) hat einen Motor (35), von dem sich ein Wellenelement (26) nach unten erstreckt, das seinerseits mit einer mehrspurigen Riemenscheibe (27) verbunden ist, die drei Riemen (29) hat, einen für jede Schneidkopfrolle (34), die ihrerseits über ein kurzes Wellenelement (36) direkt mit der Schneidkopfanordnung (14) verbunden sind; Spannrollenanordnungen (50), die aus einer Anordnung von Riemenscheiben und Vorspannmitteln bestehen, und die Spannung auf den Riemen (29) aufrechterhalten, **dadurch gekennzeichnet, dass** sie außerdem ein Ratschenmittel umfasst, das aus einer Sperrklinke (17) und einem Zahnrad (19) besteht, das es der Abdeckanordnung (13) ermöglicht, sich nur in eine Richtung zu drehen.

2. Schneidgerät (10) nach Anspruch 1, wobei die Abdeckanordnung (13) abgerundete Kanten aufweist, die drei Abschnitte (15) definieren, die in gleichem Abstand voneinander angeordnet sind.

3. Schneidgerät (10) nach Anspruch 1, wobei die Abdeckanordnung (13) ferner aus Deckelelementen (38) besteht, eines für jeden Abschnitt (15), um Zugang zu den Schneidkopfanordnungen (14) zu ermöglichen.

4. Schneidgerät (10) nach Anspruch 1, wobei das Verbindungselement (20) gelenkig an dem Traktor (12) befestigt ist.

5. Schneidgerät (10) nach Anspruch 1, wobei das Ratschenmittel (21) ein dreizahniges Zahnrad (19) aufweist.

6. Schneidgerät (10) nach Anspruch 1, wobei der Motor (35) elektrisch oder hydraulisch sein kann oder durch eine biegsame Welle angetrieben wird, die mit einem kompatiblen Ausgang am Traktor (12) verbunden ist.

7. Kombination aus einem Schneidgerät (10) nach einem der vorhergehenden Ansprüche und einem Rasenmähertraktor (12).

8. Kombination nach Anspruch 7, wobei die Abdeckanordnung (13) abgerundete Kanten aufweist, die drei Abschnitte (15) definieren, die gleich weit voneinander entfernt sind.

9. Kombination nach Anspruch 7, wobei die Abdeckanordnung (13) ferner aus Deckelelementen (38) besteht, eines für jeden Abschnitt (15), um Zugang zu den Schneidkopfanordnungen (14) zu ermöglichen.

10. Kombination nach Anspruch 7, wobei das Verbindungselement (20) schwenkbar am Traktor (12) angebracht ist.

11. Kombination nach Anspruch 7, wobei der Motor (35) elektrisch oder hydraulisch sein kann oder durch eine biegsame Welle angetrieben wird, die mit einem kompatiblen Ausgang am Traktor (12) verbunden ist.

## Revendications

1. Un dispositif de coupe (10) à trois têtes de coupe (14) destiné à être utilisé comme accessoire d'un tracteur-tondeuse (12) comprend un ensemble de couverture (13) sous lequel sont situés lesdits trois ensembles de tête de coupe (14) positionnés de manière triangulaire ; ledit ensemble de couverture (13) pivote autour d'un axe central (16) ; ledit dispositif de coupe à trois têtes (10) comporte un élément de connexion (20) pour le connecter audit tracteur (12) au moyen d'un bras articulé (23) ; ledit bras est relié audit élément de connexion (20) au niveau d'un point de pivotement (25), à partir duquel un moyen de rappel (27) est également relié ; chacun desdits trois ensembles de tête de coupe (14) est constitué d'un élément de lame double (30) et d'une roulette (32) ; ladite roulette (32) tourne avec lesdits ensembles de tête de coupe (14) ; ledit ensemble de couverture (13) est en outre supporté par une roue de support (24) qui reprend la charge dudit élément de connexion (20) et dudit bras articulé (23) ; ledit axe central (16) comprend un moteur (35) à partir duquel s'étend vers le bas un élément d'arbre (26), qui lui-même se connecte à une poulie à voies multiples (27) qui a trois courroies (29), une pour chaque poulie de tête de coupe (34), qui elles-mêmes se connectent directement à ladite tête de coupe (14) au moyen d'un élément d'arbre court (36) ; des ensembles de poulies de tension (50), qui consistent en un ensemble de poulies et de moyens de rappel, maintiennent la tension sur lesdites courroies (29), **caractérisé en ce qu'**il comprend en outre un moyen d'encliquetage constitué d'un cliquet (17) et d'un engrenage denté (19) permettant audit ensemble de couverture (13) de pivoter dans une seule direction.

2. Dispositif de coupe (10) selon la revendication 1, dans lequel ledit ensemble de couverture (13) a des bords arrondis qui définissent trois sections (15), qui sont équidistantes les unes des autres.

3. Dispositif de coupe (10) selon la revendication 1, dans lequel ledit ensemble de couverture (13) est en outre constitué d'éléments de couvercle (38), un pour chaque section (15), pour donner accès auxdits ensembles de tête de coupe (14).

4. Dispositif de coupe (10) selon la revendication 1, dans lequel ledit élément de connexion (20) est fixé de manière articulée audit tracteur (12).

5. Dispositif de coupe (10) selon la revendication 1, dans lequel ledit moyen d'encliquetage (21) comporte un engrenage à trois dents (19).

6. Dispositif de coupe (10) selon la revendication 1, dans lequel ledit moteur (35) peut être électrique ou hydraulique, ou entraîné par un arbre flexible relié à une sortie compatible sur le tracteur (12).

7. Combinaison d'un dispositif de coupe (10) selon l'une des revendications précédentes et d'un tracteur tondeuse (12).

8. Combinaison selon la revendication 7, dans laquelle ledit ensemble de couverture (13) a des bords arrondis qui définissent trois sections (15), qui sont équidistantes les unes des autres.

9. Combinaison selon la revendication 7 dans laquelle ledit ensemble de couvercle (13) est en outre constitué d'éléments de couvercle (38), un pour chaque section (15), pour donner accès auxdits ensembles de tête de coupe (14).

10. Combinaison selon la revendication 7, dans laquelle ledit élément de connexion (20) est fixé de manière articulée audit tracteur (12).

11. Combinaison selon la revendication 7, dans laquelle ledit moteur (35) peut être électrique ou hydraulique, ou entraîné par un arbre flexible relié à une sortie compatible sur ledit tracteur (12).
